# EUROPÄISCHE PATENTANMELDUNG

(11) **EP 2 026 253 A1**
(43) Veröffentlichungstag der Anmeldung: **18.02.2009**
(21) Anmeldenummer: 07015683.1
(22) Anmeldetag: 09.08.2007
(51) Int. Cl.: G06K 19/077, G01V 15/00

(54) **Warenverpackung mit Deckfolie**

(71) Anmelder: Alcan Technology & Management AG, 8212 Neuhausen (CH)
(72) Erfinder: Kiy, Michael, Dr., 8404 Winterthur (CH)
(74) Vertreter: Wagner, Kilian

(57) **Zusammenfassung**

Die Erfindung betrifft eine Warenverpackung (1) mit einer mindestens eine Metallschicht aufweisenden Deckfolie (4). Erfindungsgemäß ist vorgesehen, dass die Warenverpackung (1) mindestens einen RFlD-Chip (6) und mindestens eine mit dem RFID-Chip (6) zusammenwirkende, in oder auf der Deckfolie (4) angeordnete RFID-Antenne (5) aufweist, wobei der Antenne mindestens eine erste Aussparung (7), zumindest in der Metallschicht der Deckfolie (4) zugeordnet ist.

## Beschreibung

Die Erfindung betrifft eine Warenverpackung mit einer, mindestens eine Metallschicht aufweisenden Deckfolie. Ferner betrifft die Erfindung eine Deckfolie mit mindestens einer Metallschicht, insbesondere für eine Warenverpackung sowie ein System zum Auslesen von Informationen über die Warenverpackung und/oder den Inhalt der Warenverpackung, insbesondere zur Identifizierung und Verifizierung der Warenverpackung.

Die bekannten Durchdrück- bzw. Blisterverpackungen bestehen aus einem Blisterbodenteil und einer gegen das Blisterbodenteil gesiegelten, die Packung verschließenden Deckfolie. Eine zur dosierten Verpackung pharmazeutischer Produkte, wie Tabletten, bekannte Blisterverpackung weist üblicherweise eine Vielzahl von einzelnen kleinen Behältnissen in Form von aus der Bodenfolie herausgeformten, napfförmigen Vertiefungen (Kavitäten) im Blisterbodenteil zur Aufnahme der Tabletten auf. Zur Entnahme einer einzelnen Tablette aus einer Blisterverpackung wird die entsprechende Kavität im Bodenteil eingedrückt und hierbei die Tablette durch die Deckfolie hindurchgedrückt. Üblicherweise ist die Deckfolie eine Aluminiumfolie oder eine Verbundfolie aus einer Aluminiumfolie mit weiteren Schichten aus Kunststoff oder papier. Deckfolien mit mindestens einer Aluminiumschicht sind ein bevorzugtes Deckelmaterial für Blisterverpackungen, da bei den gewählten Dicken der Deckelmaterialien relativ geringe Bruchkräfte notwendig sind, die benötigte Durchstoßenergie somit gering ist und das Aluminium eine geringe Dehnung aufweist.

Daneben sind Durchdrück- bzw. Blisterverpackungen mit einer metallfolienfreien Deckfolie bekannt.

Es ist wünschenswert, mittels einer sogenannten RFID-Technologie (radio frequency identification device Technology = Identifizierung über Radiowellen) Informationen über die Warenverpackung oder die in der Warenverpackung verpackten Waren auszulesen. Hierzu umfasst die Warenverpackung einen sogenannten RFID-Tag mit einem RFID-Chip und einer RFID-Antenne, wobei der RFID-Chip bzw. die in diesem gespeicherte Information mittels eines RFID-Lesers kontaktfrei ausgelesen werden kann. Beispielsweise kann in dem RFID-Chip eine die Herkunft der Warenverpackung identifizierende Kodierung abgespeichert werden, die dann mittels der RFID-Lesers ausgelesen werden kann.

Es existieren RFID-Tags für unterschiedliche Frequenzbereiche. Sogenannte LF-RFIDs arbeiten in einem Frequenzbereich zwischen 30 und 500 kHz. LF-RFIDs können unmittelbar auf eine Metallschicht aufweisende Deckfolie aufgebracht werden. Das Metall in der Nähe der LF-RFID-Antenne stellt für die Aussendung von Information kein Problem dar, da die ausgestrahlten Wellen in der genannten Frequenz die Metallschicht ausreichend durchdringen können.

Auch können sogenannte UHF-RFIDs oder VHF-RFIDs, die bei 869 MHz und 2,45 GHz bzw. 5,8 GHz und 24,125 GHz arbeiten auf einer eine Metallschicht aufweisenden Deckfolien eingesetzt werden. Hierzu wird die Deckfolie geschlitzt und die derart gebildete Schlitzantenne mit einer Länge von in etwa der halben wellenlänge wirkt mit dem RFID-Chip zusammen.

Der Einsatz von HF-RFIDs, die bei 13,56 MHz arbeiten, ist zusammen mit einer, mindestens eine Metallschicht aufweisenden Deckfolie problematisch, da die Metallschicht die Funkwellen reflektiert und Interferenzen das Lesen des RFID-Chips quasi unmöglich machen. Dabei haben hausinterne Versuche der Anmelderin gezeigt, dass ein unmittelbar auf eine Deckfolie aus Metall aufgeklebter RFID-Chip nicht auslesbar ist.

In der EP 1 793 332 A1 ist ein RFID-Tag beschrieben, der selbst dann, wenn er auf einer Metalloberfläche aufgebracht ist, funktionieren soll. Hierzu weist der RFID-Tag einen metallfreien Abstandhalter auf, der zwischen der RFID-Antenne und der Metalloberfläche angeordnet ist, so dass die RFID-Antenne von der Metalloberfläche beabstandet ist. Hierdurch baut eine derartige Warenverpackung jedoch vergleichsweise hoch.

Der Erfindung liegt die Aufgabe zugrunde, eine Warenverpackung mit einer mindestens eine Metallschicht aufweisenden Deckfolie vorzuschlagen, die zum Zusammenwirken mit HF-RFID-Technologie ausgebildet ist und dabei ohne die im Stand der Technik notwendigen, hochbauenden Abstandhalter auskommt. Ferner besteht die Aufgabe darin, eine entsprechend verbesserte Deckfolie sowie ein System zum Auslesen eines an der Warenverpackung angeordneten RFID-Chips vorzuschlagen.

Diese Aufgabe wird hinsichtlich der eingangs beschriebenen Warenverpackung dadurch gelöst, dass die Warenverpackung mindestens einen RFID-Chip und mindestens eine mit dem RFID-Chip zusammenwirkende, in, auf oder unter der Deckfolie angeordneten RFID-Antenne aufweist, welcher mindestens eine erste Aussparung, zumindest in der Metallschicht der Deckfolie zugeordnet ist. Hierbei ist "zumindest in der Metallschicht der Deckfolie" so zu verstehen, dass im Fall der ausschließlichen Ausbildung der Deckfolie aus Metall die erste Aussparung die gesamte Deckfolie in Richtung ihrer Dickenerstreckung, d. h. quer zu ihrer Flächenerstreckung, durchsetzt und dass im Fall der Ausbildung der Deckfolie als Verbundfolie mit mindestens einer Metallschicht von der ersten Aussparung die mindestens eine Metallschicht, also sämtliche Metallschichten der Deckfolie, quer zur Flächenerstreckung der Deckfolie durchsetzt.

Hinsichtlich der mindestens eine Metallschicht aufweisenden bzw. vollständig aus Metall, vorzugsweise aus Aluminium oder einer Aluminiumlegierung bestehenden Deckfolie wird die Aufgabe dadurch gelöst, dass die RFID-Antenne in oder auf der Deckfolie angeordnet ist, wobei der RFID-Antenne zumindest eine Aussparung zumindest in der Metallschicht der Deckfolie zugeordnet ist.

Hinsichtlich des Systems wird die Aufgabe mit einem System umfassend eine nach dem Konzept der Erfindung ausgebildete Warenverpackung und einen RFID-Leser gelöst.

Der Erfindung liegt der Gedanke zugrunde, der in der mindestens eine Metallschicht aufweisenden Deckfolie oder auf dieser angeordneten RFID-Antenne, die signalleitend mit einem RFID-Chip verbunden ist, mindestens eine erste Aussparung zumindest in der Metallschicht der Deckfolie zuzuordnen. Insbesondere dann, wenn die Deckfolie ausschließlich aus einer Metallfolie, d.h. Metallschicht besteht, durchsetzt dabei die Aussparung die gesamte Deckfolie quer zu ihrer Flächenerstreckung. Auch bei einer als Verbundfolie ausgebildeten Deckfolie ist es, insbesondere fertigungstechnisch, von Vorteil, wenn die erste Aussparung die gesamte Deckfolie quer zu ihrer Flächenerstreckung durchsetzt. Durch das Vorsehen einer ersten Aussparung innerhalb der Flächenerstreckung der Deckfolie entsteht ein metallfreier oder elektrisch von der übrigen Deckfolie solierter Bereich in der Deckfolie. Überaschenderweise wurde festgestellt, dass, wenn eine derartige erste Aussparung in der Deckfolie vorgesehen und der RFID-Antenne geeignet zugeordnet ist, der RFID-Chip ausgelesen werden kann. Von Vorteil ist es, dabei die erste Aussparung in räumlicher Nähe zu der RFID-Antenne anzuordnen. Auf einen im Stand der Technik notwendigen hochbauenden (aufragenden) Abstandshalter zwischen der Deckfolie und der RFID-Antenne kann aufgrund des erfindungsgemäßen Vorsehens der ersten Aussparung verzichtet werden. Bevorzugt ist eine Ausführungsform, bei der der RFID-Chip und die RFID-Antenne als passiver Transponder ausgebildet sind, der seine Energie zur Versorgung des RFID-Chips aus den über die RFID-Antenne empfangenen Funkwellen, insbesondere eines RFID-Lesers, bezieht. Dabei liegt es im Rahmen der Erfindung, die elektrische Energie induktiv und/oder kapazitiv und/oder elektromagnetisch über die RFID-Antenne, die gleichzeitig als Sendeantenne dient, einzukoppeln. Bevorzugt arbeitet der zur Anwendung kommende RFID-Chip und die eingesetzte RFID-Antenne im Hochfrequenzbereich (HF-Bereich), vorzugsweise bei einer Frequenz aus einem Frequenzbereich zwischen 3 und 30 MHz. Vorzugsweise sind der RFID-Chip und die RFID-Antenne für eine Frequenz von 13,56 MHz ausgelegt.

In Weiterbildung der Erfindung ist mit Vorteil vorgesehen, dass die RFID-Antenne sich innerhalb der Deckfolie befindet und/oder unmittelbar oben auf und/oder unten auf die Deckfolie aufgebracht ist. Das Aufbringen der RFID-Antenne auf die Deckfolie kann beispielsweise durch Aufkleben oder Aufdrucken erfolgen. Das Vorsehen eines Abstandshalters zwischen der RFID-Antenne und der Deckfolie kann aufgrund der ersten Aussparung ggf. in Kombination mit einer später noch zu erläuternden, zweiten Aussparung zumindest in der Metallschicht der Deckfolie verzichtet werden, wodurch die Warenverpackung durch das Vorsehen der RFID-Antenne, bei auf der Deckfolie angeordneter RFID-Antenne lediglich einen geringen Dicken-Auftrag aufweist. Es ist auch möglich, und liegt im Rahmen der Erfindung, die mindestens eine Aussparung mit einer auf einem Abstandshalter angeordneten RFID-Antenne zu kombinieren, um deren Performance zu verbessern. Dabei ist der Abstandshalter vorzugsweise unmittelbar auf der Deckfolie angeordnet.

Im Falle des Vorsehens einer aufgeklebten RFID-Antenne ist zwischen der eigentlichen RFID-Antenne und der Deckfolie lediglich eine Kleberschicht bzw. eine die Kleberschicht und die RFID-Antenne tragende Folienschicht vorgesehen, deren Dickenerstreckung quer zur Flächenerstreckung der Deckfolie vernachlässigbar gering ist.

Von besonderem Vorteil ist eine Ausführungsform, bei der die RFID-Antenne ringförmig ausgebildet ist. Bevorzugt handelt es sich bei der RFID-Antenne um eine Spulenantenne, deren, beispielsweise konzentrisch angeordnete, Windungen in einer Ringfläche angeordnet sind. Bevorzugt ist eine Ausführungsform der RFID-Antenne, bei der diese bzw. deren Wicklungen kreisringförmig angeordnet sind. Bevorzugt ist eine Ausführungsform, bei der die erste Aussparung, also der erste metallfreie Bereich der Deckfolie zumindest abschnittsweise, vorzugsweise vollständig radial innerhalb der RFID-Antenne angeordnet ist, die RFID-Antenne also die erste Aussparung zumindest abschnittsweise, vorzugsweise vollständig, umschließt. Neben einer kreisringförmigen Konturierung der RFID-Antenne ist beispielsweise auch eine zumindest näherungsweise rechteckringförmige Konturierung, oder eine andere geometrische Ringform der RFID-Antenne realisierbar.

Von besonderem Vorteil ist eine Ausführungsform, bei der die RFID-Antenne konzentrisch zu der ersten Aussparung angeordnet ist, der äußere Umfangsrand der ersten Aussparung also allseitig zumindest näherungsweise gleichmäßig vom Innenumfang der RFID-Antenne beabstandet ist oder unmittelbar an die erste Aussparung angegrenzt.

In Bezug auf die Ausbildung bzw. Ausformung der ersten Aussparung gibt es unterschiedliche Möglichkeiten. Besonders bevorzugt ist eine ringförmige, vorzugsweise kreisringförmige Ausbildung der ersten Aussparung. Bevorzugt ist die ringförmige erste Aussparung dabei so bemessen, dass sie einen nicht ausgesparten Deckfolienbereich mit einem Durchmesser aus einem Wertebereich zwischen etwa 0,5 cm und etwa 10 cm, vorzugsweise zwischen etwa 0,5 cm und etwa 3 cm, umschließt. Besonders bevorzugt ist eine Ausführungsform, bei der eine ringförmige erste Aussparung einen nicht ausgesparten Deckfolienbereich mit einem Durchmesser von etwa 1 cm umschließt. Die radiale Breite der ringförmigen ersten Aussparung beträgt vorzugsweise zwischen etwa 1 mm und etwa 5 mm.

Zusätzlich oder alternativ zu einer ringförmigen Ausbildung der ersten Aussparung ist das Vorsehen einer vollflächigen ersten Aussparung möglich, also einer Aussparung, die radial innen keinen Deckfolienbereich, zumindest jedoch keinen Metallschichtbereich der Deckfolie umschließt. Dabei ist es denkbar, die erste Aussparung vollflächig kreisförmig oder rechteckig oder in einer anderen geometrischen Flächenform zu konturieren, wobei die erste Aussparung in diesem Fall bevorzugt derart dimensioniert ist, dass ihr (mittlerer) Durchmesser aus einem Wertebereich zwischen etwa 0,5 cm und etwa 2,0 cm gewählt ist. Bevorzugt beträgt der Durchmesser einer vollflächigen ersten Aussparung etwa 1 cm.

Optimal ist es, wenn zusätzlich zu der ersten, vorzugsweise konzentrisch innerhalb der RFID-Antenne angeordneten Aussparung mindestens eine zweite Aussparung vorgesehen ist, die der RFID-Antenne zugeordnet ist, die zumindest abschnittsweise im Bereich der RFID-Antenne angeordnet ist. Die zweite Aussparung spart wie die erste Aussparung die zumindest eine Metallschicht der Deckfolie, vorzugsweise die gesamte Deckfolie aus. Dabei ist es realisierbar, dass die zweite Aussparung in die erste Aussparung übergeht, also sozusagen einen zweiten Abschnitt einer Gesamtaussparung bildet, oder aber beabstandet zu der ersten Aussparung angeordnet ist.

Besonders gute Übertragungsergebnisse (Reichweiten) wurden bei einer Ausführungsform erzielt, bei der die zweite Aussparung linienförmig ausgebildet ist. Bevorzugt erstreckt sich die linienförmige zweite Aussparung dabei ausgehend von der ersten Aussparung, insbesondere ausgehend von einem Außenrand der ersten Aussparung in eine erste Richtung.

Besonders bevorzugt ist es, wenn sich die zweite, linienförmige Aussparung ausgehend von der ersten Aussparung, d. h. unmittelbar von der ersten Aussparung oder von benachbart zu der ersten Aussparung, nicht nur in eine erste Richtung, sondern auch zumindest in eine zweite Richtung erstreckt, wobei die zweite Richtung bevorzugt der ersten Richtung entgegengesetzt ist.

Besonders bevorzugt ist es dabei, wenn die zweite Aussparung gerade verläuft.

Es liegt im Rahmen der Weiterbildung der Erfindung die zweite Aussparung als durchgehende, insbesondere linienförmige Aussparung auszubilden oder aber die zweite Aussparung, zumindest abschnittsweise perforiert auszubilden. Insbesondere bei einer zumindest abschnittsweise als Perforation ausgebildeten zweiten Aussparung ist es vorteilhaft, wenn die Perforation nicht nur die Metallfolie, sondern auch ein Trägermaterial für die Metallfolie zumindest teilweise durchsetzt, so dass der Warenträger entlang der Perforation aufgetrennt werden kann. Dabei ist eine Ausführungsform von Vorteil, bei der auch die RFID-Antenne entsprechend (entlang der Perforation) durchtrennbar ist.

Besonders bevorzugt ist eine Ausführungsform, bei der sich die zweite Aussparung entlang der gesamten Deckfolie erstreckt, so dass die zweite Aussparung die Deckfolie in mindestens zwei, vorzugsweise gleich große Teilabschnitte aufteilt, die höchstens, im Fall der Ausbildung der zweiten Aussparung als Perforation, über die nicht ausgesparten Abschnitte der Perforation metallisch miteinander verbunden sind. Besonders bevorzugt ist es, wenn die Teilabschnitte der Deckfolie, insbesondere durch das Vorsehen einer durchgehenden zweiten Aussparung nicht durch eine Metallschicht miteinander verbunden sind.

Neben dem Vorsehen einer zweiten Aussparung ist es denkbar, weitere Aussparungen für eine weitergehende Unterteilung der Deckfolie vorzusehen.

Bevorzugt ist eine Ausführungsform, bei der die erste und/oder die zweite Aussparung als Bestandteil einer Aufrisshilfe zum erleichterten Aufreißen der Warenverpackung ausgebildet sind/ist, die erste und/oder die zweite Aussparung sich also bis zu einem Rand der Warenverpackung erstrecken/erstreckt. Die erste und/oder die zweite Aussparung stellen/stellt somit eine gezielte Materialschwächung der Warenverpackung dar, aufgrund deren Vorsehen die Warenverpackung erleichtert aufgerissen werden kann.

In Weiterbildung der Erfindung ist mit Vorteil vorgesehen, RFID-Chip und die RFID-Antenne auf einem RFID-Tag zusammengefasst sind. Dieser RFID-Tag ist bevorzugt auf die Deckfolie aufklebbar. Hierzu dient bevorzugt eine extrem dünne, die RFID-Antenne und den RFID-Chip tragende Klebefolie. Alternativ ist es denkbar, den RFID-Chip und/oder die RFID-Antenne auf die Deckfolie aufzudrucken.

Fertigungstechnisch ist es vorteilhaft, wenn die erste und/oder die zweite Aussparung die gesamte Deckfolie in Richtung ihrer Dickenerstreckung durchsetzen. Dabei ist es denkbar, dass die erste und/oder die zweite Aussparung nicht nur die gesamte Deckfolie, sondern auch einen unterhalb der Deckfolie angeordneten Träger durchsetzen, also auch innerhalb des Trägers eine zumindest abschnittsweise in der Kontur der ersten und/oder zweiten Aussparung ausgebildete Aussparung vorgesehen ist. Bevorzugt handelt es sich bei dem Träger um einen Träger aus Kunststoff.
Eine bevorzugte Möglichkeit zum Einbringen der ersten und/oder der zweiten Aussparung in die Deckfolie besteht darin, die erste und/oder die zweite Aussparung durch Ausstanzen in die vorzugsweise von einer Rolle abwickelbaren Deckfolie einzubringen. Dabei ist es denkbar, die Deckfolie vor dem Aufbringen auf einen Träger zu stanzen und/oder nach dem Festlegen der Deckfolie an dem Träger. Je nach Ausbildung des Stanzwerkzeugs ist es dabei möglich, die Deckfolie vollständig oder nur die zumindest eine Metallschicht der Deckfolie auszustanzen. Ebenso ist es möglich die erste und/oder die zweite Aussparung derart einzubringen, dass nicht nur die gesamte Deckfolie, sondern auch ein unterhalb der Deckfolie angeordneter Träger, insbesondere aus Kunststoff mit mindestens einer Aussparung versehen wird.

Wie eingangs erwähnt, ist eine Ausführungsform von Vorteil, bei der die Deckfolie entweder vollständig als Aluminiumfolie ausgebildet ist oder zumindest eine Schicht einer Verbund-Deckfolie aus einer Aluminiumfolie besteht. Dabei ist unter Aluminiumfolie sowohl eine Folie aus reinem Aluminium als auch eine Folie aus einer Aluminiumlegierung zu verstehen. Bevorzugt beträgt die Dicke der Deckfolie dabei 5 bis 60 µm, vorzugsweise zwischen etwa 10 und 30 µm.

Von besonderem Vorteil ist eine Ausführungsform der Warenverpackung, bei der diese als Blisterverpackung (Durchdrückverpackung) ausgebildet ist, wobei die Deckfolie als Durchdrückfolie ausgebildet ist und mit einem Bodenteil (Träger für die Deckfolie) versiegelt ist. Dabei ist in dem Bodenteil mindestens eine, von der Deckfolie verschlossene Kavität angeordnet, in der beispielsweise eine Tablette aufgenommen werden kann. Insbesondere für eine im pharmazeutischen Bereich als Medikamentenverpackung eingesetzte Blisterverpackung ist es vorteilhaft, wenn die Deckfolie zumindest eine Metallschicht, insbesondere eine Aluminiumfolie enthält oder als solche ausgebildet ist.

Bevorzugt ist eine Ausführungsform der Blisterverpackung, bei der die erste und/oder die zweite Aussparung in einem Bereich der Deckfolie angeordnet sind, unter dem keine Kavitäten angeordnet sind. Beispielsweise ist es dabei realisierbar, dass sich die zweite Aussparung als Perforation durch das Bodenteil fortsetzt um somit die Blisterverpackung in einzelne, jeweils mindestens eine Kavität aufweisende Teilstücke auftrennen zu können.

Bevorzugt ist eine eingangs erwähnte Ausführungsform der Warenverpackung, bei der der RFID-Chip und die RFID-Antenne, die vorzugsweise in einem RFID-Tag zusammengefasst sind, im Hochfrequenzbereich, insbesondere in einem Frequenzbereich zwischen etwa 3 und 30 MHz arbeitend ausgebildet sind. Dabei sind der RFID-Chip und die RFID-Antenne bevorzugt für einen Frequenzbereich von 13,57 MHz ausgelegt.

Von besonderem Vorteil ist eine Ausführungsform der Warenverpackung, bei der nicht nur die RFID-Antenne in oder, bevorzugt unmittelbar, auf der Deckfolie angeordnet ist, sondern bei der auch der RFID-Chip in oder, vorzugsweise unmittelbar, auf der Deckfolie angeordnet ist.

Die Erfindung führt auch auf eine Deckfolie für eine Warenverpackung nach einem der vorhergehenden Ansprüche, wobei die Deckfolie mindestens eine Metallschicht umfasst, d.h. mindestens eine Metallschicht aufweist oder aus einer Metallfolie, insbesondere einer Aluminiumfolie besteht. Erfindungsgemäß ist vorgesehen, dass in oder, vorzugsweise unmittelbar, auf der Deckfolie eine RFID-Antenne angeordnet ist, der zumindest eine erste Aussparung zumindest in der Metallschicht der Deckfolie zugeordnet ist.

Von besonderem Vorteil ist eine Ausführungsform der Deckfolie, bei der zumindest eine zweite, zumindest in der Metallschicht vorgesehene, der RFID-Antenne zugeordnete Aussparung vorgesehen ist.

Zur Vermeidung von Wiederholungen wird auf vorteilhafte Ausgestaltungen der Deckfolie im Zusammenhang mit der zuvor beschriebenen Warenverpackung verwiesen, wobei diese vorteilhaften Ausbildungen als eigenständige Weiterbildungen der Deckfolie offenbart gelten und als solche in Kombination oder einzeln beanspruchbar sein sollen.

Die Erfindung betrifft auch ein System zum Auslesen von Informationen über eine Warenverpackung und/oder den Inhalt einer Warenverpackung, insbesondere zur Identifizierung und Verifizierung der Warenverpackung. Ein derartiges System umfasst einen nach dem Konzept der Erfindung ausgebildeten, zuvor beschriebenen Warenträger sowie einen RFID-Leser.

Vorzugsweise kommunizieren der RFID-Leser und der RFID-Chip auf der Warenverpackung dabei im NFC-Protokoll (Near-Field-Communication-Protokoll). Bei einer geeigneten Verschaltung des RFID-Chips, insbesondere mit Leiterbahnen auf oder in der Deckfolie, ist es möglich, über den RFID-Chip Füllgradinformationen (compliance) auszusenden und mit einem RFID-Leser auszulesen. Ebenso ist es denkbar, bei der Verschaltung des RFID-Chips mit einem Sensor, insbesondere einem Temperatursensor, entsprechende Sensormessergebnisse auszusenden. Es ist auch denkbar, mindestens einen Sensor in den RFID-Chip zu integrieren.

Von besonderem Vorteil ist eine Ausführungsform, bei der der RFID-Leser-Bestandteil eines Mobiltelefons, insbesondere eines Mobiltelefons mit NFC-Technologie (near field communication-technologie = Nahfeld-Kommunikations-Technologie)ist.

Werden mehrere Warenverpackungen, beispielsweise in einem Träger, zusammengefasst, ist es von Vorteil die RFID-Antennen und damit die Aussparungen über- bzw. nebeneinander anzuordnen, also derart, dass die RFID-Antennen und die Aussparungen der unterschiedlichen Verpackungen in Stapelrichtung fluchten. Anders ausgedrückt sollen die RFID-Antennen in einer Linie zu einem RFID-Leser ausgerichtet werden, um alle RFID-Chips auslesen zu können.

Weitere Vorteile, Merkmale und Einzelheiten der Erfindung ergeben sich aus der nachfolgenden Beschreibung bevorzugter Ausführungsbeispiele sowie anhand der Zeichnungen. Diese sollen die Ausführungsbeispiele der Erfindung nicht notwendigerweise maßstäblich darstellen, vielmehr sind die Zeichnungen, wo zur Erläuterung dienlich, in schematisierter und/oder leicht verzerrter Form ausgeführt. Im Hinblick auf Ergänzungen der aus der Zeichnung unmittelbar erkennbaren Leeren wird auf den einschlägigen Stand der Technik verwiesen. Dabei ist zu berücksichtigen, dass vielfältige Modifikationen und Änderungen betreffend die Form und das Detail eine Ausführungsform vorgenommen werden können, ohne von der allgemeinen Idee der Erfindung abzuweichen. Die in der Beschreibung, in den Zeichnungen sowie in den Ansprüchen offenbarten Merkmalen der Erfindung können sowohl einzelne als auch in beliebiger Kombination für die Weiterbildung der Erfindung wesentlich sein. Zudem fallen in den Rahmen der Erfindung alle Kombinationen aus zumindest zwei von in der Beschreibung, den Zeichnungen und/oder den Ansprüchen offenbarten Merkmalen. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchtem Gegenstand. Bei den angegebenen Wertebereichen sollen auch innerhalb der genannten Grenzen liegende Werte als Grenzwerte offenbart und beliebig einsetzbar und beanspruchbar sein.

### Es zeigen:

- Fig. 1:: eine als Blisterverpackung (Durchdrückverpackung) ausgebildete Warenverpackung in einer Seitenansicht,
- Fig. 2:: ein erstes Ausführungsbeispiel einer Warenverpackung in einer Rückansicht, wobei auf einer aus Metall bestehenden Deckfolie ein RFIDChip sowie eine RFID-Antenne angeordnet sind, wobei der RFID-Antenne eine erste und eine zweite Aussparung in der Deckfolie zugeordnet sind, die nahtlos ineinander übergehen,
- Fig. 3:: ein zweites Ausführungsbeispiel einer Warenverpackung in einer Rückansicht mit einem RFID-Tag und drei, der RFID-Antenne des RFID-Tags zugeordneten Aussparungen in der Deckfolie,
- Fig. 4:: ein drittes Ausführungsbeispiel einer Warenverpackung in einer Rückansicht mit einer ersten, kreisrunden Aussparung und zweiten, linienförmigen, als Perforation ausgebildeten Aussparung,
- Fig. 5:: ein viertes Ausführungsbeispiel einer Warenverpackung in einer Rückansicht mit einem RFID-Chip und einer RFID-Antenne, wobei der RFID-Antenne eine kreisrunde erste Aussparung in der Deckfolie sowie zwei weitere im 90° zueinander verlaufende, jeweils als Perforation ausgebildete Ausnehmungen zugeordnet sind,
- Fig. 6:: ein fünftes Ausführungsbeispiel einer Warenverpackung in einer Rückansicht mit einem RFID-Chip und einer RFID-Antenne, wobei der RFID-Antenne eine ringförmige erste Aussparung in der Deckfolie zugeordnet ist, die in eine zweite Aussparung in der Deckfolie, die sich linienförmig über die gesamte Deckfolie erstreckt,

- Fig. 7:: ein sechstes Ausführungsbeispiel einer Warenverpackung in einer Rückansicht, mit einem RFID-Chip und einer RFID-Antenne, wobei der RFID-Antenne eine erste ringförmige Aussparung in der Deckfolie sowie zwei weitere Aussparungen zugeordnet sind, wobei eine der weiteren Aussparungen als durchgehende Linie und die andere Aussparung als Perforation ausgebildet ist und
- Fig. 8:: eine schematische Darstellung eines Systems umfassend einen Warenträger mit RFID-Tag sowie einen RFID-Leser in einem Mobiltelefon.

In den Figuren sind gleiche Bauteile und Bauteile mit der gleichen Funktion mit den gleichen Bezugszeichen gekennzeichnet.

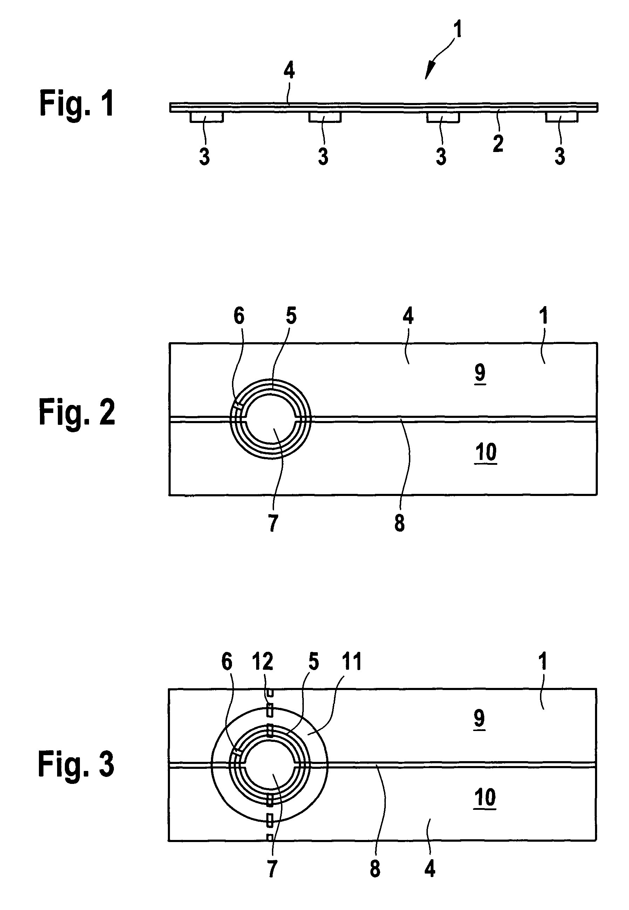

In Fig. 1 ist eine als Blisterverpackung (Durchdrückverpackung) ausgebildete Warenverpackung 1 gezeigt. Die Warenverpackung 1 umfasst ein Bodenteil 2 aus Kunststoff mit einer Vielzahl von Kavitäten 3 (muldenartige Vertiefungen) Die Kavitäten 3 sind mit einer Deckfolie 4, die entweder aus einer Metallfolie, insbesondere einer Aluminiumfolie, besteht oder zumindest eine Metallfolienschicht, insbesondere eine Aluminiumfolienschicht aufweist, verschlossen, wobei sich, wie aus den Fig. 2 bis 8 ersichtlich ist, die Deckfolie 4 flächig über die gesamte, als Träger für die Deckfolie dienende Rückseite des Bodenteils 2 erstreckt. An dieser Stelle sei nochmals darauf hingewiesen, dass sich die Erfindung nicht ausschließlich auf Blisterverpackungen bezieht, sondern auf sämtliche Warenverpackungen, die eine, mindestens eine Metallfolie umfassende Deckfolie oder eine als Metallfolie ausgebildete Deckfolie, insbesondere eine Aluminiumfolie umfassen. Lediglich beispielhaft seien Getränkeverpackungen genannt.

In Fig. 2 ist ein erstes Ausführungsbeispiel einer Warenverpackung 1 gezeigt. Zu erkennen ist die Deckfolie 4, die sich oberhalb eines nicht sichtbaren, in Fig. 1 gezeigten, Bodenteils 2 befindet. Unmittelbar auf der Deckfolie 4 mit der mindestens einen Metallschicht ist eine RFID-Antenne 5 angeordnet, die sowohl zur kontaktlosen Einkopplung von Energie als auch zum Aussenden von Signalen dient. Die als Spulenantenne ausgebildete, kreisringförmig angeordnete RFID-Antenne 5 ist signalleitend mit einem RFID-Chip 6 verbunden. Der RFID-Chip 6 ist ebenfalls auf der Deckfolie 4 angeordnet. Der RFID-Chip 6 und die RFID-Antenne 5 bilden zusammen einen passiven Transponder der, wenn Energie über einen geeigneten RFID-Leser in die RFID-Antenne 5 zum Betreiben des RFID-Chips 6 eingekoppelt wird, in dem RFID-Chip 6 gespeicherte Informationen über die RFID-Antenne aussendet. Der gezeigte RFID-Chip 6 und die gezeigte RFID-Antenne 5 mit ihren konzentrischen Spulenwindungen arbeiten bei einer HF-Frequenz von 13,56 MHz. Anstelle des Aufbringens des RFID-Chips und der RFID-Antenne 5 auf die Deckfolie 4 ist es denkbar den RFID-Chip 6 und/oder die RFID-Antenne 5, beispielsweise durch Einlaminieren, in die Deckfolie 4 zu integrieren.

Wie aus Fig. 2 zu erkennen ist, ist die RFID-Antenne 5 auf der Deckfolie 4 aufgebracht. Der RFID-Antenne 5 ist eine erste Aussparung 7 in der Deckfolie 4 zugeordnet. Diese erste Aussparung 7 ist konzentrisch innerhalb der kreisringförmigen RFID-Antenne 5 angeordnet. Die erste Aussparung 7 ist so ausgebildet, d.h. so tief in Querrichtung zur Flächenerstreckung der Deckfolie 4 bemessen, dass die erste Aussparung 7 im Falle der Ausbildung der Deckfolie 4 als Verbundfolie die mindestens eine Metallfolie durchsetzt, also so tief ausgebildet ist,
dass im Bereich innerhalb der ersten Aussparung 7 sämtliches Metall aus der Deckfolie 4 entfernt wurde. Herstellungstechnisch ist es vorteilhaft, wenn die erste Aussparung 7 die gesamte Deckfolie 4 durchdringt, d.h. dass im Bereich innerhalb der ersten Aussparung 7 keine Deckfolie 4 vorhanden ist. Es ist auch denkbar, insbesondere dann, wenn die erste Aussparung 7 durch Ausstanzen hergestellt wurde, dass sich die erste Aussparung 7 bis in das Bodenteil 2 oder durch dieses hindurch erstreckt.

Wie aus Fig. 2 weiter hervorgeht, ist die erste Aussparung 7 kreisringförmig ausgebildet. Es ist jedoch auch denkbar andere geometrische Formen zu realisieren. Bevorzugt ist die Außenkontur der ersten Aussparung 7 an die Form der in diesem Fall kreisringförmigen RFID-Antenne 5 angepasst.

Neben der ersten Aussparung 7 ist eine zweite Aussparung 8 vorgesehen, die in diesem Ausführungsbeispiel bis an die erste Aussparung 7 heranreicht. Diese zweite Aussparung 8 ist linienförmig und gerade ausgebildet und erstreckt sich in zwei gegenüberliegende Richtungen, ausgehend von der ersten Aussparung 7. Die zweite Aussparung 8 ist wie die erste Aussparung 7 so tief bemessen, dass die zumindest eine Metallschicht der Deckfolie 4 durchdrungen wird, so dass innerhalb der zweiten Aussparung 8 keine Metallschicht der Deckfolie 4 vorhanden ist. Die zweite Aussparung 8 unterteilt die Deckfolie 4 in zwei elektrisch voneinander isolierte Teilabschnitte 9, 10.

Der Durchmesser der ersten Aussparung 7 beträgt in dem gezeigten Ausführungsbeispiel etwa 1 cm. Die Schlitzbreite, also die Erstreckung der zweiten Aussparung 8 quer zu ihrer Längserstreckung beträgt in dem gezeigten Ausführungsbeispiel etwa 1 mm.

Alternativ zu der gezeigten Ausführungsform gemäß Fig. 2 ist es auch denkbar, innerhalb der ersten Aussparung 7 und/oder innerhalb der zweiten Aussparung 8 Metall anzuordnen. Dieses muss jedoch von der mindestens einen Metallschicht der Deckfolie 4 elektrisch isoliert sein, beispielsweise durch das Vorsehen eines Luftspaltes oder durch das Vorsehen einer Isolationsschicht zwischen der mindestens einen Metallschicht der Deckfolie 4 und dem Metall innerhalb der ersten und/zweiten Aussparung 7, 8 in der Deckfolie 4.

In Fig. 3 ist ein alternatives Ausführungsbeispiel einer Warenverpackung 1 gezeigt. In dem gezeigten Ausführungsbeispiel sind die RFID-Antenne 5 und der RFID-Chip 6 in einem RFID-Tag 11 zusammengefasst. Dieser mit einer der Deckfolie 4 zugewandten, an einer dünnen Trägerfolie für den RFID-Chip 6 und die RFID-Antenne 5 angeordneten Klebeschicht ausgebildete RFID-Tag ist unmittelbar auf die Deckfolie 4 aufgeklebt. Wie in dem Ausführungsbeispiel gemäß Fig. 2 gezeigt, ist die RFID-Antenne 5 als kreisringförmig angeordnete Spulenantenne ausgebildet, die signalleitend mit dem RFID-Chip 6 verbunden ist. Radial innerhalb der RFID-Antenne 5, konzentrisch und mit Radialabstand zu dieser ist eine kreisförmige erste Aussparung 7 angeordnet, die die zumindest eine Metallschicht in der Deckfolie 4 ausspart. Gegebenenfalls kann die erste Aussparung 7 das gesamte Bodenteil 2 durchdringen. Wie bei dem Ausführungsbeispiel gemäß Fig. 2 geht die erste Aussparung 7 unmittelbar in eine zweite, linienförmige Aussparung 8 über, die sich in einander entgegengesetzte Richtungen erstreckt und die Deckfolie 4 in zwei Teilabschnitte 9, 10 unterteilt. Dabei ist die Aussparung 8 zumindest so bemessen, dass die zumindest eine Metallschicht der Deckfolie 4 ausgespart ist. Es ist denkbar, die gesamte Deckfolie 4 im Bereich der zweiten Aussparung 8 auszusparen oder sogar eine Ausführungsform, bei der die zweite Aussparung 8 auch das Bodenteil 2 durchsetzt.

Zusätzlich zu der zweiten Aussparung 8 ist eine dritte Aussparung 12 vorgesehen, die sich rechtwinklig zu der zweiten Aussparung 8 erstreckt. Die dritte Aussparung 12 ist gerade und linienförmig ausgebildet. Im Gegensatz zu der zweiten Aussparung 8 ist die dritte Aussparung 12 als Perforationslinie ausgebildet. Die dritte Aussparung 12 besteht also aus einer Vielzahl von voneinander in Längsrichtung beabstandeter Teilaussparungen.

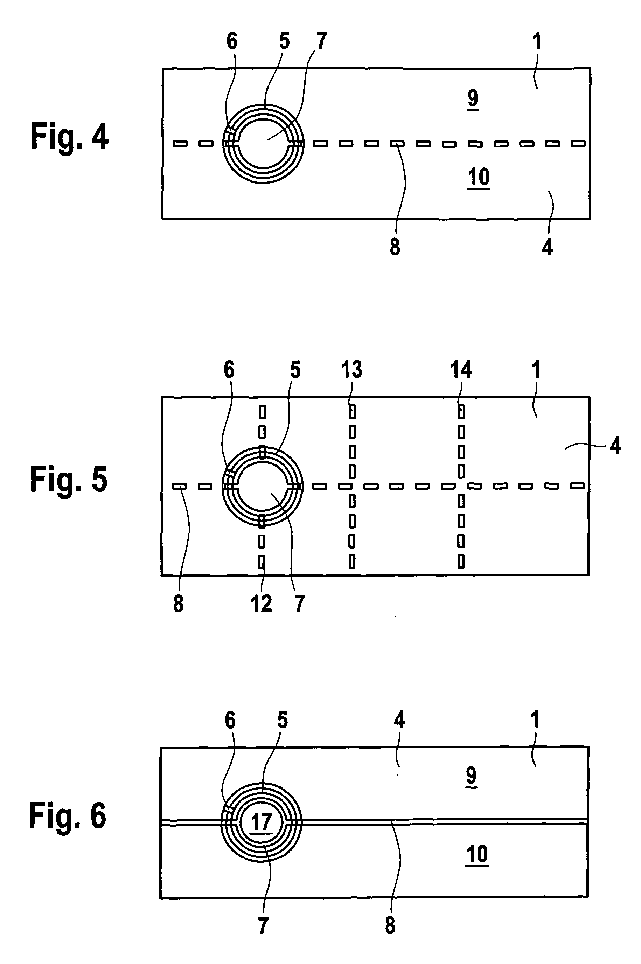

In Fig. 4 ist ein drittes Ausführungsbeispiel einer Warenverpackung 1 gezeigt. Zu erkennen ist die Deckfolie 4 und die kreisringförmig ausgebildete, auf der Deckfolie 4 angeordnete RFID-Antenne 5, die mit einem RFID-Chip 6 zusammenwirkt. Der RFID-Antenne 5 ist eine kreisförmige erste Aussparung 7 zugeordnet, um die herum sich die RFID-Antenne 5 konzentrisch erstreckt. Zusätzlich zu der ersten Aussparung 7 ist eine zweite, als Perforation ausgebildete Aussparung 8 vorgesehen, die die Deckfolie in zwei Teilabschnitte 9, 10 unterteilt. Die zweite Aussparung 8 besteht aus einer Vielzahl von auf einer Linie nebeneinander angeordneten Teilaussparungen. Die beiden Teilabschnitte 9, 10 der Deckfolie 4 sind über Bereiche zwischen den Teilausnehmungen elektrisch leitend und über die mindestens eine Metallschicht der Deckfolie 4 verbunden. In den Bereichen der Aussparungen 7, 8 ist diese mindestens eine Metallschicht oder die gesamte Deckfolie ausgespart.

In Fig. 5 ist ein weiteres Ausführungsbeispiel einer Warenverpackung 1 in einer Rückansicht gezeigt. Zu erkennen ist die Deckfolie 4 und die auf dieser angeordnete kreisringförmige RFID-Antenne 5 sowie der RFID-Chip 6. Konzentrisch innerhalb der RFID-Antenne 5 ist eine kreisförmige erste Aussparung 7 angeordnet. Des Weiteren ist eine zweite Aussparung 8 vorgesehen, die sich über die gesamte Längserstreckung der Warenverpackung 1 erstreckt und als Perforation mit einer Vielzahl von nebeneinander angeordneten Teilaussparungen erstreckt. Senkrecht zu dieser verläuft eine dritte Aussparung 12, die ebenfalls als Perforation ausgebildet ist. Der gedachte Schnittpunkt der zweiten Aussparung 8 und der dritten Aussparung 12 befindet sich im Zentrum der kreisförmigen, vollflächigen ersten Aussparung 7. Neben den Aussparungen 7, 8, 12 sind zwei weitere Aussparungen 13, 14, die ebenfalls als Perforation ausgebildet sind und senkrecht zur zweiten Aussparung 8 verlaufen, vorgesehen. Bevorzugt durchdringen zumindest die zweite, die dritte sowie die vierte und die fünfte Aussparung 8, 12, 13, 14 nicht nur die Deckfolie 4, sondern auch das Bodenteil 2, so dass einzelne Teilabschnitte der Warenverpackung 1 mit vorzugsweise jeweils einer Kavität voneinander durch Aufreißen entlang der Aussparungen 8, 12, 13, 14 erhalten werden können.

In Fig. 6 ist ein weiteres Ausführungsbeispiel einer Warenverpackung 1 gezeigt. Zu erkennen ist die kreisringförmige RFID-Antenne 5 sowie der mit dieser zusammenwirkende RFID-Chip 6. Radial innerhalb der RFID-Antenne 5, in konzentrischer Anordnung mit dieser befindet sich eine erste Aussparung 7, die in dem gezeigten Ausführungsbeispiel als Kreisring ausgebildet ist. Radial innerhalb des Kreisrings mit einem Innendurchmesser von in diesem Ausführungsbeispiel etwa 1 cm befindet sich ein nicht ausgesparter Abschnitt 17 der Deckfolie 4. In diesem nicht ausgesparten Abschnitt 17 ist die Deckfolie 4 vollständig erhalten. Durch das Vorsehen der ersten Aussparung 7 ist jedoch der nicht ausgesparte Abschnitt 17 von den Teilabschnitten 9 der Deckfolie 4 elektrisch isoliert. Die Teilabschnitte 9, 10 der Deckfolie 4 sind dabei durch das Vorsehen einer zweiten Ausnehmung 8 gebildet, die in die erste Aussparung 7 übergeht und die sich in zwei einander entgegengesetzte Richtungen, ausgehend von der ersten Aussparung 7 über die gesamte Längserstreckung der Warenverpackung 1 erstreckt.

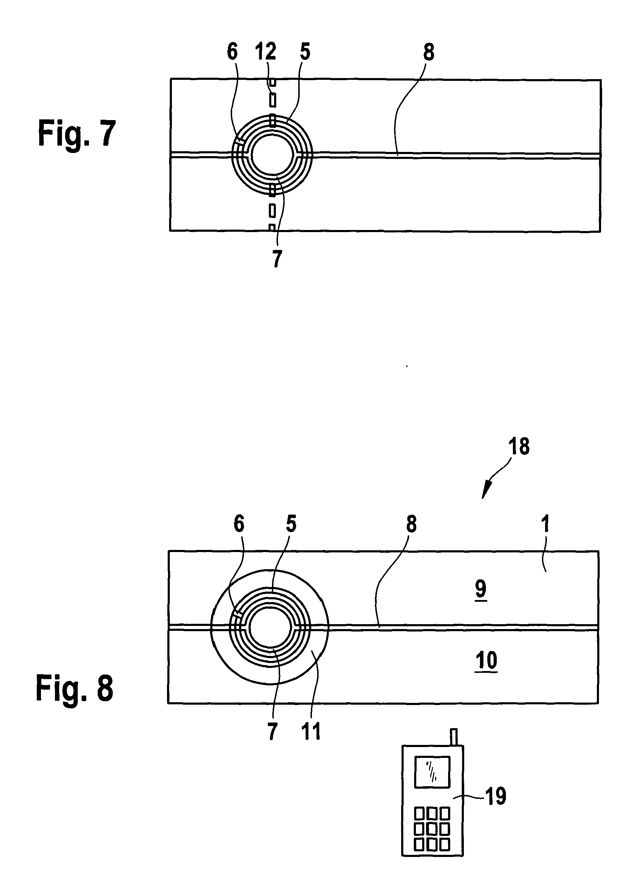

In Fig. 7 ist ein weiteres Ausführungsbeispiel einer Warenverpackung 1 gezeigt. Zu erkennen ist wieder die kreisringförmige RFID-Antenne 5 sowie der RFID-Chip 6. Radial innerhalb der RFID-Antenne 5 ist eine kreisringförmige erste Aussparung 7 vorgesehen, die im Ausführungsbeispiel gemäß Fig. 6 in eine linienförmige zweite Aussparung 8 übergeht. Zusätzlich ist eine dritte Aussparung 12 vorgesehen, die als Perforation ausgebildet ist, wobei die dritte Aussparung 12 senkrecht zu der zweiten Aussparung 8 verläuft.

In Fig. 8 ist ein System 18 umfassend eine Warenverpackung 1 und einen RFID-Leser 19 in Form eines Mobiltelefons gezeigt. Auf der Warenverpackung 1, genauer unmittelbar auf der Deckfolie 4, befindet sich eine RFID-Antenne 5 und ein RFID-Chip 6. Radial innerhalb der RFID-Antenne 5 befindet sich eine kreisringförmige, erste Ausnehmung 7, die in eine linienförmige, sich in einander entgegengesetzte Richtungen erstreckende, zweite Aussparung 8. Durch letztere, zweite Aussparung 8 werden zwei elektrisch voneinander isolierte Teilabschnitte 9, 10 der Deckfolie 4 erhalten. Die RFID-Antenne 5 und der RFID-Chip 6 bilden zusammen einen passiven Transponder, der mit dem RFID-Leser in dem an sich bekannten NFC-Protokoll kommuniziert. Dabei wird von dem RFID-Leser elektrische Energie kontaktlos in die RFID-Antenne 5 eingekoppelt, so dass der RFID-Chip 6 arbeiten und Informationen über die RFID-Antenne 5 an den RFID-Leser 19 senden kann. Dies können auf dem RFID-Chip 6 abgespeicherte Informationen, wie beispielsweise eine Kodierung, sein, oder bei einer entsprechenden Schaltungsanbindung des RFID-Chips 6 auch Informationen über den Füllgrad der Warenverpackung 1.

Die in den Ausführungsbeispielen gezeigte RFID-Antenne 5 und der gezeigte RFID-Chip 6 können, beispielsweise wie in Fig. 3 gezeigt, als RFID-Tag ausgebildet und auf die Deckfolie 4 geklebt sein. Alternativ ist es denkbar, zumindest die RFID-Antenne 5 auf die Deckfolie 4 aufzudrucken oder auf sonstige Weise auf dieser festzulegen oder in die Deckfolie 4 zu integrieren. Sämtliche in den Figuren gezeigten Deckfolien 4 können als einschichtige Metallfolie, insbesondere als Aluminiumfolie ausgebildet sein oder aber als Verbundfolie mit mindestens einer Metallschicht, insbesondere einer Aluminiumschicht. Dabei sind die erste und/oder die zweite Aussparung 7, 8 so zu dimensionieren bzw. einzubringen, dass im Falle einer einteiligen Metall-Deckfolie diese vollständig entfernt ist oder bei einer Verbund-Deckfolie zumindest sämtliche Metallschichten entfernt sind. Fertigungstechnisch ist es möglich, die Aussparungen 7, 8 vor dem Aufbringen der Deckfolie 4 auf das Bodenteil 2 in die Deckfolie 4 einzubringen, beispielsweise durch Einstanzen. Alternativ dazu ist es denkbar die Aussparungen 7, 8 nach dem Festlegen der Deckfolie 4 auf den Bodenteil 2 einzubringen, wobei es in diesem Fall vorteilhaft ist, dass die Aussparungen 7, 8 nicht nur die Deckfolie 4, sondern auch das Bodenteil 2 durchdringen.

## Patentansprüche

1. Warenverpackung mit einer, mindestens eine Metallschicht aufweisenden, Deckfolie (4),
**dadurch gekennzeichnet,**
**dass** die Warenverpackung (1) mindestens einen RFID-Chip (6) und mindestens eine mit dem RFID-Chip (6) zusammenwirkende, in, auf, oder unter der Deckfolie (4) angeordnete RFID-Antenne (5) aufweist, der mindestens eine erste Aussparung (7), zumindest in der Metallschicht der Deckfolie (4) zugeordnete ist.

2. Warenverpackung nach Anspruch 1,
**dadurch gekennzeichnet,**
**dass** die RFID-Antenne (5) unmittelbar auf die Deckfolie (4) aufgebracht, insbesondere aufgeklebt oder aufgedruckt, ist.

3. Warenverpackung nach einem der Ansprüche 1 oder 2,
**dadurch gekennzeichnet,**
**dass** die RFID-Antenne (5) ringförmig, insbesondere kreisringförmig, ausgebildet ist und dass die erste Aussparung (7) zumindest abschnittsweise, vorzugsweise vollständig, radial innerhalb der RFID-Antenne (5) angeordnet ist.

4. Warenverpackung nach Anspruch 3,
**dadurch gekennzeichnet,**
**dass** die RFID-Antenne (5) konzentrisch zu der ersten Aussparung (7) angeordnet ist.

5. Warenverpackung nach einem der vorhergehenden Ansprüche,
**dadurch gekennzeichnet,**
**dass** die erste Aussparung (7), zumindest
abschnittsweise, ringförmig, insbesondere kreisringförmig, ausgebildet ist und vorzugsweise einen Deckfolienbereich, bevorzugt mit einem Innendurchmesser von etwa 0,5 cm bis etwa 2 cm, besonders bevorzugt von etwa 1 cm, umschließt.

6. Warenverpackung nach einem der Ansprüche 1 bis 4,
**dadurch gekennzeichnet,**
**dass** die erste Aussparung (7) vollflächig, insbesondere kreisförmig, vorzugsweise mit einem Durchmesser von etwa 0,5 cm bis etwa 10 cm, insbesondere von etwa 0,5 cm bis etwa 3 cm, besonders bevorzugt von etwa 1 cm, ausgeformt ist.

7. Warenverpackung nach einem der vorhergehenden Ansprüche,
**dadurch gekennzeichnet,**
**dass** der RFID-Antenne (5) mindestens eine zweite Aussparung (8), zumindest in der Metallschicht der Deckfolie (4), zugeordnet ist.

8. Warenverpackung nach Anspruch 7,
**dadurch gekennzeichnet,**
**dass** die zweite Aussparung (8) linienförmig ausgebildet ist.

9. Warenverpackung nach Anspruch 8,
**dadurch gekennzeichnet,**
**dass** sich die linienförmige zweite Aussparung (8) ausgehend von der ersten Aussparung (7), in eine erste Richtung erstreckt.

10. Warenverpackung nach Anspruch 9,
**dadurch gekennzeichnet,**
**dass** sich die linienförmige zweite Aussparung (8), ausgehend von der ersten Aussparung (7) in mindestens eine zweite, vorzugsweise der ersten Richtung entgegengesetzte, Richtung erstreckt.

11. Warenverpackung nach einem der Ansprüche 8 bis 10,
**dadurch gekennzeichnet,**
**dass** die zweite Aussparung (8) gerade ausgebildet ist.

12. Warenverpackung nach einem der Ansprüche 7 bis 9,
**dadurch gekennzeichnet,**
**dass** die zweite Aussparung (8) zumindest abschnittsweise, als Perforation ausgebildet ist.

13. Warenverpackung nach einem der Ansprüche 8 bis 12,
**dadurch gekennzeichnet,**
**dass** die zweite Aussparung (8) die Deckfolie (4) in mindestens zwei, vorzugsweise gleich große, bevorzugt elektrisch voneinander isolierte, Teilabschnitte (9, 10) aufteilend angeordnet ist.

14. Warenverpackung nach einem der vorhergehenden Ansprüche,
**dadurch gekennzeichnet,**
**dass** die erste und/oder die zweite Aussparung (7, 8) Bestandteil einer Aufreißhilfe zum erleichterten Aufreißen der Warenverpackung (1) ausgebildet sind/ist.

15. Warenverpackung nach einem der vorhergehenden Ansprüche,
**dadurch gekennzeichnet,**
**dass** der RFID-Chip (6) und die RFID-Antenne (5) als, insbesondere auf die Deckfolie (4) aufklebbarer, RFID-Tag (11) ausgebildet sind.

16. Warenverpackung nach einem der vorhergehenden Ansprüche,
**dadurch gekennzeichnet,**
**dass** die erste und/oder die zweite Aussparung (7, 8) die gesamte Deckfolie (4) und gegebenenfalls einen unterhalb der Deckfolie (4) angeordneten Träger durchsetzend ausgebildet ist.

17. Warenverpackung nach einem der vorhergehenden Ansprüche,
**dadurch gekennzeichnet,**
**dass** die erste Aussparung (7) und/oder die zweite Aussparung (8) durch Ausstanzen in die Deckfolie (4) eingebracht ist.

18. Warenverpackung nach einem der vorhergehenden Ansprüche,
**dadurch gekennzeichnet,**
**dass** die Deckfolie (4) als Aluminiumfolie oder als Verbundfolie mit mindestens einer Aluminiumfolienschicht ausgebildet ist.

19. Warenverpackung nach einem der vorhergehenden Ansprüche,
**dadurch gekennzeichnet,**
**dass** die Warenverpackung (1) als Blisterverpackung mit einem mindestens eine Kavität aufweisenden Bodenteil (2) ausgebildet ist, mit dem die als Durchdrückfolie ausgebildete Deckfolie (4) versiegelt ist.

20. Warenverpackung nach Anspruch 19,
**dadurch gekennzeichnet,**
**dass** die erste und/oder die zweite Aussparung (7, 8) in einem Bereich der Deckfolie (4) zwischen darunter befindlichen Kavitäten (3) angeordnet ist.

21. Warenverpackung nach einem der vorhergehenden Ansprüche,
**dadurch gekennzeichnet,**
**dass** der RFID-Chip (6) und die RFID-Antenne (5) im Hochfrequenzbereich, insbesondere in einem Frequenzbereich von 3 bis 30 MHz, vorzugsweise bei 13,56 MHz, arbeitend ausgebildet sind.

22. Warenverpackung nach einem der vorhergehenden Ansprüche,
**dadurch gekennzeichnet,**
**dass** der RFID-Chip (6) in oder auf der Deckfolie (4) angeordnet ist.

23. Deckfolie, insbesondere für eine Warenverpackung (1) nach einem der vorhergehenden Ansprüche, umfassend mindestens eine Metallschicht,
**dadurch gekennzeichnet,**
**dass** in, auf oder unter der Deckfolie (4) eine RFID-Antenne (5) angeordnet ist, der zumindest eine erste Aussparung (7) zumindest in der Metallschicht der Deckfolie (4) zugeordnet ist.

24. Deckfolie nach Anspruch 23,
**dadurch gekennzeichnet,**
**dass** zumindest eine zweite, zumindest in der Metallschicht vorgesehene, der RFID-Antenne (5) zugeordnete Aussparung vorgesehen ist.

25. System zum Auslesen von Informationen über eine Warenverpackung (1) und/oder den Inhalt einer Warenverpackung (1), insbesondere zur Identifizierung und Verifizierung der Warenverpackung (1), umfassend eine Warenverpackung (1) nach einem der Ansprüche 1 bis 19 und einen RFID-Leser (19).

26. System nach Anspruch 25,
**dadurch gekennzeichnet,**
**dass** der RFID-Leser (19) Bestandteil eines Mobiltelefons, insbesondere eines Mobiltelefons mit NFC-Technologie ist.
